# EUROPÄISCHE PATENTANMELDUNG

(11) **EP 4 699 779 A2**
(43) Veröffentlichungstag der Anmeldung: **25.02.2026**
(21) Anmeldenummer: 25218093.0
(22) Anmeldetag: 22.11.2022
(51) Int. Cl.: B29C 48/10

(54) **VERFAHREN FÜR EINE ÜBERWACHUNG EINER FOLIENBLASE SOWIE EINE BLASFOLIENANLAGE**

(30) Priorität: 22.11.2021 DE 102021213124
(62) Teilanmeldung aus: 22821914.3
(71) Anmelder: Windmöller & Hölscher KG, 49525 Lengerich (DE)
(72) Erfinder: HEHMANN, Ingo, 49525 Lengerich (DE); VENTKER-STEGERMANN, Marco, 49525 Lengerich (DE); BEMBENEK, Michel, 49525 Lengerich (DE); GLOSE, Sebastian, 49586 Neuenkirchen (DE); BUSSMANN, Markus, 48161 Münster (DE)

(57) **Zusammenfassung**

Die Erfindung beschreibt ein Verfahren für eine Überwachung einer Folienblase in einem Austrittsbereich nach dem Austreten aus einer Austrittsdüse und vor dem Verlassen einer Kalibriereinrichtung einer Blasfolienvorrichtung, welches die folgenden Schritte aufweist:
• Detektieren der Intensitäten der von mindestens zwei unterschiedlichen Orten der Außenoberfläche der Blasfolie emittierten Strahlung mittels wenigstens einem optischen Sensor zu verschiedenen, aufeinander folgenden Zeitpunkten
• Ermitteln von Orten gleicher Intensitäten
• Ermitteln des zeitlichen Verlaufs der Orte gleicher Intensitäten.

## Beschreibung

Die Erfindung betrifft ein Überwachungsverfahren nach Anspruch 1 sowie eine Blasfolienanlage nach Anspruch 8.

In einer Blasfolienanlage werden in einem oder mehreren Extrudern aus Kunststoffgranulaten eine oder mehrere Kunststoffschmelzen erzeugt. Innerhalb eines Blaskopfes werden die Schmelze oder die Schmelzen ringförmig verteilt und durch eine Austrittsdüse im Austrittsbereich aus dem Blaskopf herausgeführt. Über einen Abzug, der ein Walzenpaar mit wenigstens einer angetriebenen Walze umfasst, wird die auf diese Weise entstandene Folienblase abgezogen. Stromabwärts der Austrittsdüse, aber vor dem Abzug wird die Blasfolie in der Regel innen und/oder außen mittels Kühleinrichtungen abgekühlt, so dass sich die Schmelze verfestigt. In der Regel wird durch den Abzug und/oder durch einen innerhalb der Folienblase herrschender Überdruck die Folienblase in Transportrichtung und/oder in radialer Richtung gedehnt. Nach einem gewissen Transportweg ist die Folienblase so weit verfestigt, dass sie nicht mehr nennenswert verformbar ist. Diesen Übergang nennt man Frostzone, der Bereich zwischen Austrittsbereich und Frostzone wird oft als Schlauchbildungszone bezeichnet. Bevor die Folienblase den Abzug passiert, wird sie noch durch eine Kalibiereinrichtung geführt, die sich bevorzugt stromabwärts der Frostzone befindet Zwischen Kalibriereinrichtung und Abzug kann sich noch eine Flachlegeeinrichtung befinden, welche die Folienblase über einen längeren Transportweg schonend in eine doppelte Flachbahn überführt. Die Art und Weise, wie die Folienblase zwischen der Austrittsdüse und der Kalibriereinrichtung beeinflusst wird, spielt eine entscheidende Rolle für die Qualität und die Eigenschaften der späteren, aus der Folienblase entstandene Folie. Die Beeinflussung der Folienblase kann beabsichtigt, aber auch unbeabsichtigt erfolgen. Eine nachteilige Beeinflussung der Folienblase ist dabei zu vermeiden. Daher ist es wünschenswert, die Folienblase bereits zwischen dem Austrittsbereich und der Kalibriereinrichtung zu charakterisieren. Damit kann bei einer nachteiligen Beeinflussung Abhilfe geschaffen werden.

Die Aufgabe ist es daher, ein Verfahren und eine Vorrichtung zur verbesserten Charakterisierung der Folienblase vorzuschlagen.

Die voranstehende Aufgabe wird gelöst durch ein Verfahren mit den Merkmalen des Anspruchs 1 sowie eine Blasfolienanlage mit den Merkmalen des Anspruchs 8. Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit der erfindungsgemäßen Blasfolienanlage und jeweils umgekehrt, sodass bezüglich der Offenbarung zu den einzelnen Erfindungsaspekten stets wechselseitig Bezug genommen wird bzw. werden kann.

Die Erfindung bezieht sich auf ein Verfahren für eine Überwachung einer Folienblase in einem Austrittsbereich nach dem Austreten aus einer Austrittsdüse und vor dem Verlassen einer Kalibriereinrichtung einer Blasfolienvorrichtung. Erfindungsgemäß erfolgen dabei die Schritte:
- Detektieren der Intensität der von mindestens zwei unterschiedlichen Orten der Außenoberfläche der Blasfolie emittierten Strahlung mittels wenigstens einem optischen Sensor zu verschiedenen, aufeinander folgenden Zeitpunkten
- Ermitteln von Orten gleicher Intensität
- Ermitteln des zeitlichen Verlaufs der Orte gleicher Intensität.

Das Detektieren erfolgt dabei durch mindestens einen Detektor, mit welchem die von der Blasfolie ausgesendete elektromagnetische Strahlung detektierbar ist bzw. detektiert wird. Die Messung der Intensität erfolgt dabei insbesondere innerhalb eines festgelegten Wellenlängenbereichs (das so genannte Messfenster), auf den vorzugsweise der zumindest eine Detektor optimiert ist.

Die elektromagnetische Strahlung kann im so genannten Infrarotbereich liegen, bei der die Wellenlänge zwischen 780nm und 1mm beträgt, aber auch im für den Menschen sichtbaren Bereich (Wellenlänge zwischen 380nm und 780 nm) oder im hochenergetischen Bereich liegen (UV-Strahlung, Wellenlänge unterhalb 380nm).

Die Infrarotstrahlung ist dabei in der Regel eine in der Blasfolie selbst entstehende Strahlung, die sich auf eine Wärmestrahlung zurückführen lässt. Die sichtbare und hochenergetische Strahlung entsteht in der Regel in einer dafür vorgesehenen Lichtquelle, die von der Folienblase reflektiert oder transmittiert wird. Mit Hilfe von Strahlungen unterschiedlicher Wellenlängen können verschiedene Eigenschaften der Folienblase untersucht werden. Sichtbare Strahlung kann etwa dazu verwendet werden, Defekte der Folienblase sichtbar zu machen, wie etwa Streifen, Stippen, Löcher oder ein Schmelze- bzw. Folienabriss. Die Strahlung im Infrarotbereich stammt zumindest teilweise aus der Wärmestrahlung der Folienblase. Die Intensität in dem Messfenster dieser Strahlung ist somit ein Maß für die Temperatur der Folienblase.

Der Kerngedanke der Erfindung ist nun, mit wenigstens einem Detektor die elektromagnetische Strahlung, die von unterschiedlichen Orten, insbesondere von Orten der Außenoberfläche, der Folienblase ausgeht, sei es durch Eigenstrahlung, Reflektion und/oder Transmission, aufzunehmen bzw. zu messen. Damit ist es möglich, die Folienblase an zwei unterschiedlichen Orten hinsichtlich bestimmter Eigenschaften, insbesondere der Temperatur, zu charakterisieren.

Insbesondere ist weiterhin vorgesehen, dass die vorbeschriebene Messung zu verschiedenen, aufeinander folgenden Zeitpunkten wiederholt wird. Insgesamt ist es so möglich, nicht nur eine Charakterisierung der Folienblase an unterschiedlichen Orten durchzuführen, sondern die zeitliche Entwicklung der Messwerte, also der gemessenen Intensität, nachzuverfolgen. Bevorzugt werden bei den zeitlich nachfolgenden Messungen diese an denselben Orten bzw. an nahezu denselben Orten wie vorherige Messungen durchgeführt.

Ferner ist gemäß der Erfindung vorgesehen, Orte gleicher Intensität zu ermitteln. Dies kann insbesondere durch eine Interpolation der Intensitäten erfolgen, die an den vorgegebenen Orten gemessen worden sind.

Für eine weitere Charakterisierung der Folienblase ist erfindungsgemäß vorgesehen, aus den Orten gleicher Intensität einen zeitlichen Verlauf zu ermitteln. Demnach ist damit eine Nachverfolgung der Orte gleicher Intensitäten über die Zeit gegeben.

Insgesamt kann durch die beschriebene Detektion und Auswertung der Strahlung mit bestimmten Intensitäten, die von unterschiedlichen Orten ausgeht, zu unterschiedlichen Zeitpunkten eine bessere Charakterisierung der Folienblase erfolgen. Es ist nicht nur die eine Orts- oder Zeitabhängigkeit zu ermitteln, sondern beides. Insbesondere, wenn mit der detektierten Strahlung auf die relative Temperatur oder die absolute Temperatur der Folienblase zurückgeschlossen wird, kann auf unterschiedliche Bedingungen, die auf die Temperatur einwirken, zurückgeschlossen werden. Damit ist es möglich, eine Information, beispielsweise eine Warnung, auszugeben und/oder passende Gegenmaßnahmen, zum Beispiel in Form einer Anpassung von Maschinenparametern, zu ergreifen.

Weiterhin ermöglicht das erfindungsgemäße Verfahren, die äußere Form, also eine zweidimensionale Kontur der Folienblase zu erkennen. An den Rändern der Folienblase ändert sich die gemessene Intensität einer bestimmten Wellenlänge auf im Wesentlichen 0 (wenn die Hintergrundstrahlung und andere, fremde Einflüsse unberücksichtigt lässt), so dass diese Ränder zuverlässig bestimmbar sind. Die Ermittlung von Rändern der Folienblase ermöglichen es, den zeitlichen Verlauf dieser Ränder zur weiteren Charakterisierung der Folienblase zu verwenden. Verändern sich die Orte, also die Positionen der Ränder, über die Zeit, kann dies darauf hinweisen, dass die Folienblase nicht stabil produziert wird.

Eine zeitliche Änderung der Orte der Ränder, insbesondere die Auslenkungen der Ränder der Folienblase von Idealverläufen, ist dabei ein oft beobachteter Effekt und wird als Flattern bezeichnet. Auch das so genannte Blasenpumpen gehört zu diesen Effekten. Aufgrund der Ermittlung der Ränder der Folienblase kann die zeitliche Entwicklung des Flatterns oder der _Blasenpumpens beobachtet werden. Insbesondere ist das Flattern im Austrittsbereich entscheidend für die Stabilität der Folienblase. Überschreiten die Auslenkungen der Ränder generell und/oder speziell im Austrittsbereich einen vorbestimmten Wert, so werden insbesondere Prozess- und/oder Maschinenparameter angepasst, um die Auslenkung zu minimieren. Die Folienblase kann auch durch die Steuer- und Regeleinrichtung in Höhenzonen eingeteilt werden, in denen das Flattern jeweils separat beobachtet wird, wobei für jede Zone ein eigener Abweichungswert, ab dem die Anpassung der Parameter erfolgt, vorgebbar ist. Alternativ oder zusätzlich wird ein Warnsignal an den Maschinenbediener ausgegeben.

Vorteilhaft ist es, wenn die Messung der Orte gleicher Intensität in Beziehung der Transportrichtung und/oder der geometrischen Symmetrie der Folienblase gesetzt werden. Insbesondere kann anhand der Orte gleicher Intensität ein Vergleich mit der geometrischen Symmetrie der Folienblase, die sich aus den Rändern der Folienblase ergibt, erfolgen. Abweichungen der Symmetrieachsen bzw. Symmetrieebenen weisen insbesondere auf ein ungleichmäßiges Abkühlverhalten der Folienblase hin, so dass weitere Maßnahmen erfolgen können. Beispielsweise ist denkbar, ein Warnsignal an den Bediener auszugeben. Anstelle des oder zusätzlich zum Vergleich der Symmetrien können beispielsweise die Orte der Wendepunkte der Ränder oder die Winkel der Wendepunkte relativ zur nominellen bzw. gewünschten Symmetrieachse (die in der Regel von der Anordnung der Mitte der Austrittsdüse und der Symmetrieachse der Kalibriereinrichtung vorgegeben ist) verglichen werden.

In einer Weiterbildung der Erfindung ist es vorgesehen, dass für einen bestimmten Zeitpunkt eine Mittelwertlinie für die Orte gleicher Wellenlänge gebildet wird. Dabei wird insbesondere die Maßgabe berücksichtigt, dass diese Mittelwertlinie senkrecht zur Transportrichtung der Folienblase liegt. Eine solche Mittelwertlinie kann dann auch als Höhenlinie bezeichnet werden. Auf diese Weise kann bereits abgeschätzt werden, wie stark ein Ort, von dem Strahlung dieser Wellenlänge ausgeht, vom Mittelwert abweicht. Damit kann beispielsweise beurteilt werden, ob das Abkühlverhalten der Folienblase homogen oder inhomogen ist. Bei zu starken Abweichungen kann beispielsweise ein Warnsignal ausgegeben werden. Zusätzlich oder alternativ kann die Auswertung verwendet werden, um eine Regelschleife einzurichten, bei der mit einer über den Umfang der Folienblase unterschiedliche Temperierung derselben vornehmbar ist, um die Abweichungen unterhalb eines Abweichungsgrenzwertes zu halten.

Zumindest eines der folgenden Elemente und/oder dessen Einstellungen einer Blasfolienanlage können beeinflusst werden, um das Temperaturverhalten der Folienblase zu beeinflussen: Außenluftbeaufschlagungseinrichtung, Innenluftbeaufschlagungseinrichtung, Höhe der Etagenkühlung in Transportrichtung der Folienblase gesehen, Volumenstrom und/oder Temperatur der Luft, die durch die vorgenannten Elemente auf die Folienblase gegeben werden, Position des Kalibrierkorbes, Prozessparameter, die die Abkühlrate beeinflussen, insbesondere der Materialdurchsatz.

Vorteilhaft ist es, wenn die Abweichungen der Orte gleicher Intensität von einer Mittelwertlinie einer der folgenden Kategorien zugeordnet werden:
- Dynamische Abweichungen (Abweichungen mit zeitlichen Änderungen)
- Stationäre Abweichungen (Abweichungen ohne zeitliche Änderungen)

Es wird folglich die Abweichung der Orte gleicher Intensitäten von der Mittelwertlinie über die Zeit betrachtet. Eine dynamische Abweichung ist dabei eine Abweichung mit zeitlichen Änderungen, wogegen stationäre Abweichungen solche sind, die keine oder kaum zeitliche Änderungen erfahren. Dynamische Abweichungen können beispielsweise von sich bewegenden Störgrößen hervorgerufen werden, beispielsweise von einer gehenden Person, die von dem Detektor erfasst wird. Eine stationäre Abweichung kann beispielsweise von einer ortsfesten Störgröße hervorgerufen werden, von welcher die Intensität der gemessenen Strahlung beeinflusst wird. Die kann etwa ein Temperierelement wie die Innenkühlung der Blasfolienanlage sein.

Um die vorbeschriebene Einteilung durchführen zu können, werden insbesondere um die Mittelwertlinie Toleranzgrenzen definiert. Solange diese Toleranzgrenzen unterschritten werden, erfolgt eine Zuordnung zur Kategorie der stationären Abweichungen. Im anderen Fall erfolgt eine Zuordnung zu den dynamischen Abweichungen. Auf diese Weise ist es möglich, stationäre Abweichungen beispielsweise durch einmalige Veränderungen der Rezept-, Verfahrens- und/oder Maschinenparameter zu kompensieren. Bei dynamischen Abweichungen sind diese insbesondere regelmäßig zu begutachten und bei Bedarf oder regelmäßig zu kompensieren.

Weiterhin ist es vorteilhaft, wenn der zeitliche Verlauf von Orten gleicher Intensitäten für zumindest zwei verschiedene Intensitäten verglichen wird. Dabei können insbesondere die tatsächlichen Kurvenformen miteinander verglichen werden. Es können jedoch Abweichungen von der Mittelwertlinie miteinander verglichen werden, insbesondere, nachdem eine solche Abweichung aufgetreten ist. Wird der Vergleich zusätzlich für gleiche Winkelpositionen in Bezug auf die Umfangsrichtung der Folienblase durchgeführt, so lässt sich nicht nur die Fortpflanzung der Abweichung in Bezug auf die Transportrichtung, sondern auch quer dazu bestimmen, so dass die Suche nach Ursachen für die Abweichungen erleichtert wird.

Der Abstand der Orte gleicher Intensität und/oder deren Mittelwertlinien pro Intensitätsintervallund/oder pro daraus abgeleitetem Temperaturintervall kann ein Maß für die Abkühlgeschwindigkeit der Folienblase an diesem Orten sein. Insbesondere sind Temperaturgradienten für die Folienblase ableitbar. Aus einem charakteristischen Verlauf eines Temperaturgradienten ist wiederum der Ort der Frostzone der Folienblase bestimmbar. Sind aus einem Temperaturgradienten mehrere charakteristische Verläufe ableitbar, kann auch auf mehrere Frostzonen geschlossen werden. Die Temperatur einer Kunststoffschmelze wird in der Regel an dem jeweiligen Extruder und/oder innerhalb des Blaskopfs variiert. Daher ist es vorteilhaft, die Schmelzetemperatur zumindest einer Kunststoffschmelze zu verändern, so dass die Frostlinien zumindest zweiter Kunststoffschmelze im Wesentlichen auf einer gemeinsamen Höhe sich befinden.

Wenn der zeitliche Verlauf von Orten gleicher Intensitäten für dynamische Änderungen verglichen wird und daraus örtliche Fortpflanzungen der Änderungen bestimmt werden, so ist es vorteilhaft, zusätzlich die Geschwindigkeit der Fortpflanzung der Änderung zu bestimmen. Eine solche Bestimmung kann dazu beitragen, drohende Probleme und/oder Störungen frühzeitig zu erkennen. So kann eine schnelle Fortpflanzung beispielsweise auf einen drohenden Blasenabriss hinweisen. Geeignete Warnungen können ausgegeben und/oder Gegenmaßnahmen eingeleitet werden.

Ferner ist es mit der Beobachtung der dynamischen Änderungen bei einem Wechsel eines zumindest einen Materials, welches einem der Extruder zugeführt wird, möglich zu bestimmen, wann das neue Material in der Folienblase einen überwiegenden Einfluss auf die zu bestimmenden Intensitäten und damit insbesondere auf die Temperatur genommen hat. Somit ist es möglich abzuschätzen, wann ein Materialwechsel erfolgreich durchgeführt wurde.

Anhand des Abkühlverhaltens der Folienblase, das mit dem erfindungsgemäßen Verfahren bestimmt wird, ist es vorteilhaft, wenn ein Vergleich mit dem Abkühlverhalten früherer Produktionsaufträge durchgeführt wird. Auf diese Weise kann beispielsweise eine automatische Produkterkennung durchgeführt werden. Auch wird es ermöglicht, den aktuellen Produktionsauftrag mit einem früheren Produktionsauftrag mit demselben Rezept zu vergleichen, um Abweichungen bestimmen zu können. Insbesondere ist dabei vorgesehen, eine Warnmeldung an den Maschinenbediener auszugeben.

In einer weiteren, vorteilhaften Ausgestaltung der Erfindung ist vorgesehen, dass eine Zuordnung zumindest einer Abweichung zu einer Störungsursache durchgeführt wird. Insbesondere ist vorgesehen, dass für stationäre Abweichungen eine Störungsursache ermittelt wird. Eine solche Störungsursache kann beispielsweise ein Körper sein, welcher selbst elektromagnetische Strahlung aussendet, die insbesondere aufgrund einer eigenen Temperatur entsteht. Diese zusätzliche Strahlung führt zu einer Veränderung der Messung, da nun nicht nur die Strahlung der Folienblase detektiert wird. Eine solche Änderung der Strahlung kann nun durch eine einfache Subtraktion der zusätzlichen Strahlung kompensiert werden. Dadurch können spätere dynamische Abweichungen besser erkannt werden. Um eine Subtraktion durchführen zu können, kann die Strahlung des Körpers ohne Folienblase gemessen werden und/oder die Strahlung aufgrund der Temperatur des Körpers ermittelt werden.

Insbesondere bei dynamischen Abweichungen können Abweichungen in einen zeitlichen Zusammenhang mit Änderungen der Rezept-, Verfahrens- und/oder Maschinenparametern gesetzt werden. So kann beispielsweise eine Temperaturänderung an einem der Extruder mit einer zeitlichen Verzögerung zu einer Änderung der von Folienblase ausgesendeten Intensität der Strahlung führen. Eine Steuer- und Rechenvorrichtung der Blasfolienanlagen, auf der das Verfahren durchgeführt wird, kann aus diesen Daten sowie aus Daten bezüglich der Transportgeschwindigkeit der Schmelze bzw. der Folienblase diese Abhängigkeit und damit die Zuordnung herstellen.

Ferner ist es vorteilhaft, wenn eine stationäre Abweichung einem Element der Blasfolienvorrichtung zugeordnet wird. In diesem Fall kann etwa zu einem bestimmten Zeitpunkt oder für mehrere Zeitpunkte jeweils für mehrere Orte gleicher Intensitäten ein Muster der Abweichungen von der Mittelwertlinie bestimmt werden und mit den Formen von Bauteilen der Blasfolienanlage verglichen werden, um das für die Abweichungen verantwortliche Bauteil bestimmen zu können. Auf diese Weise kann der durch dieses Bauteil hervorgerufene Einfluss auf die gemessene Strahlungsintensität berücksichtigt und insbesondere kompensiert werden.

Vorteilhaft ist es darüber hinaus, wenn stationäre Abweichungen, die auf permanente Ursachen zurückzuführen sind, in einer Speichereinrichtung der Blasfolienanlage gespeichert werden und insbesondere bei nachfolgenden Produktionsaufträgen berücksichtigt werden. So können beispielsweise die weiter oben beschriebenen Einflüsse von Körpern, beispielsweise von Bauteilen der Blasfolienanlage, bereits ab Beginn der Abarbeitung des Produktionsauftrags berücksichtigt werden, ohne diesen Einfluss zunächst identifizieren zu müssen. Dieses kann zu einem verringerten Ausschuss führen.

In einer vorteilhaften Ausgestaltung der Erfindung ist eine Anzeigevorrichtung vorgesehen, auf der die Orte gleicher Intensitäten dargestellt werden. Diese Orte gleicher Intensitäten werden bevorzugt als Kurven dargestellt. Die Bereiche zwischen zwei solcher Kurven werden dabei bevorzugt farbig dargestellt, wobei bei hohen Intensitäten bevorzugt eine rote Farbgebung genutzt wird, die den gewöhnlichen Spektralfarben folgend bei kleiner werdender Intensität in eine blaue Farbgebung übergehen.

Für eine verbesserte Darstellung auf der Anzeigevorrichtung kann eine automatische Kontrastregelung der Darstellung durchgeführt werden. Dabei wird lokal die Helligkeit der Darstellung verändert, um Unterschiede deutlicher darzustellen. Dies dient der besseren Erkennbarkeit insbesondere von Abweichungen und Störungen.

Die oben genannte Aufgabe wird zusätzlich gelöst durch eine Blasfolienanlage zur Herstellung und Überwachung einer Folienblase, mit einer Austrittsdüse, aus dessen Austrittsbereich die Folienblase herausführbar ist und mit einer stromabwärts der Austrittsdüse angeordneten Kalibriereinrichtung, durch welche die Blasfolie führbar ist, ferner mit:
- einer Detektionseinrichtung zum Detektieren der Intensität der von mindestens zwei unterschiedlichen Orten der Außenoberfläche der Blasfolie emittierten Strahlung mittels wenigstens eines optischen Sensors zu verschiedenen, aufeinander folgenden Zeitpunkten und zum Umwandeln der detektieren Intensitäten in elektrische Signale
- einer Recheneinrichtung zum Empfangen und Verarbeiten der elektrischen Signale, wobei mit der Recheneinrichtung Orten gleicher Intensitäten ermittelbar sind und
wobei mit der Recheneinrichtung der zeitliche Verlauf der Orte gleicher Intensitäten ermittelbar sind.

Damit sind die gleichen Vorteile erzielbar, die bereits oben in Verbindung mit dem erfindungsgemäßen Überwachungsverfahren beschrieben worden sind.

Weitere Vorteile, Merkmale und Einzelheiten der Erfindung gehen aus der nachfolgenden Beschreibung hervor, in der unter Bezugnahme auf die Figuren verschiedene Ausführungsbeispiele im Einzelnen erläutert sind. Dabei können die in den Ansprüchen und in der Beschreibung erwähnten Merkmale jeweils einzeln für sich oder beliebige Kombinationen erwähnter Merkmale erfindungswesentlich sein. Im Rahmen der gesamten Offenbarung gelten Merkmale und Einzelheiten, die im Zusammenhang mit dem erfindungsgemäßen Verfahren beschrieben sind, selbstverständlich auch im Zusammenhang mit der erfindungsgemäßen Blasfolienanlage und jeweils umgekehrt, so dass bezüglich der Offenbarung zu den einzelnen Aspekten der Erfindung stets wechselseitig Bezug genommen wird beziehungsweise werden kann. Die einzelnen Figuren zeigen:
- Fig. 1: Seitenansicht einer erfindungsgemäßen Blasfolienanlage
- Fig. 2: Einen Ausschnitt aus der Figur 1 mit dargestellten Orten gleicher Wellenlänge

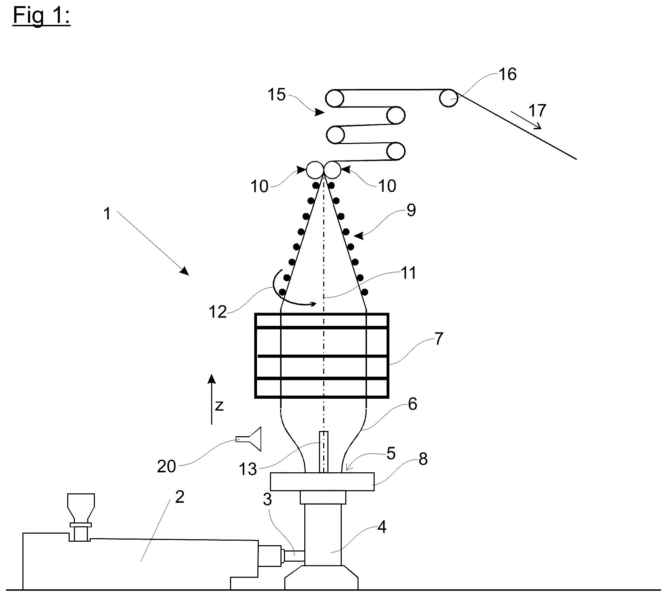

Die Figur 1 zeigt eine Vorrichtung 1 zur Herstellung eines Folienschlauches, nämlich eine Blasfolienanlage 1, die zunächst wenigstens einen Extruder 2 umfasst, mit welcher beispielsweise in Granulatform vorliegender Kunststoff plastifizierbar ist. Über eine Leitung 3 wird die so erzeugte Kunststoffschmelze einem Düsenkopf 4 zugeführt, von dem diese Schmelze in eine Folienblase 6 überführt wird, so dass dieser Schmelzestrom aus einer in dieser Figur nicht sichtbaren Ringdüse 5 in Transport- bzw. Abzugsrichtung z herausziehbar ist. Nun liegt eine noch nicht verfestigte Folienblase 6 vor. Dieser wird in der Schlauchbildungszone von innen her durch einen leichten Überdruck aufgeblasen, so dass er innerhalb der Kalibriervorrichtung 7 einen größeren Durchmesser aufweist. Zu diesem Zweck ist eine Luftbereitstellungseinrichtung 13 vorgesehen, welche sich innerhalb der Ringdüse 5 befindet und sich teilweise in Transportrichtung erstreckt. Diese Luftbereitstellungseinrichtung wird durch das Extrusionswerkzeug hindurch mit Luft versorgt.

Eine Verfestigung der Folienblase erfolgt durch eine Abkühlung, wobei ein Teil der Wärme der Folienblase an die Umgebung abgegeben wird. insbesondere durch eine Temperiervorrichtung 8, die oft auch wegen ihrer ringartigen, den Folienschlauch einfassenden Ausgestaltung als Kühlring bezeichnet wird.

Nach dem Passieren der Kalibriervorrichtung 7 gelangt die Folienblase 6 in den Wirkbereich einer Flachlegevorrichtung 9, in der der kreisrunde Folienschlauch in einen ellipsenförmigen Querschnitt mit einer zunehmenden Exzentrizität überführt wird, bis er schließlich im Einflussbereich der insbesondere zwei Abzugswalzen 10 umfassenden Abzugsvorrichtung eine doppellagige Kunststofffolie, die an ihren Seiten miteinander verbunden sind, bildet.

Die Flachlegeeinrichtung ist drehbar angeordnet, wobei die Drehachse im Wesentlichen mit der Schlauch- bzw. Symmetrieachse 11, die in der Figur 1 durch eine strichpunktierte Linie angedeutet ist, fluchtet. Die Drehbarkeit der Flachlegeeinrichtung ist mit dem Pfeil 12 angedeutet.

Die Figur 1 zeigt weiterhin eine Reversiereinrichtung 15, welche die Aufgabe hat, den flachgelegten Folienschlauch von der Flachlegevorrichtung zur ortfesten Walze 16 zu führen, ohne dass Beschädigungen auftreten.

Der Pfeil 17 deutet an, dass dieser Folienschlauch nach dem Durchlauf durch die Reversiervorrichtung 15 zur Weiterverarbeitung geführt wird, welche hier nicht näher spezifiziert ist.

In Transportrichtung z gesehen zwischen der Ringdüse 5 und dem Kalibrierkorb 7 ist wenigstens eine Detektionseinrichtung 20 angeordnet, mit welchem zumindest teilweise Flächenbereiche der Oberfläche der Folienblase 6 detektierbar sind. Die Detektionseinrichtung 20 ist außerhalb der Folienblase 6 angeordnet, jedoch auf diese gerichtet. Die Detektionseinrichtung 20 kann an einer beliebigen Komponente der Blasfolienanlage 1 direkt oder indirekt befestigt sein. Jedoch ist es auch denkbar, die Detektionseinrichtung 20 unabhängig von der Blasfolienanlage 1 auf einem eigenen Gestell, beispielsweise einem Stativ, innerhalb der Produktionsstätte aufzubauen.

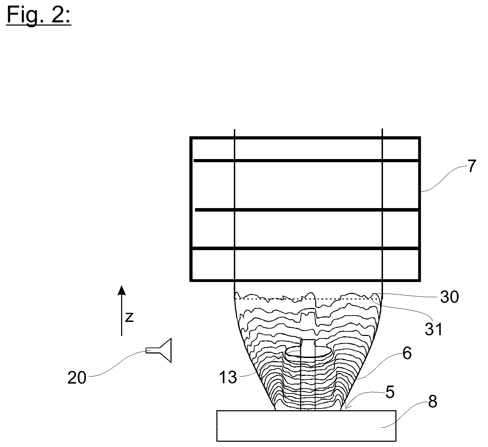

Die **Figur 2** zeigt nun einen Ausschnitt der Figur 1, wobei im Wesentlichen die Folienblase 6 in der Schlauchbildungszone sowie die Ringdüse 5, die Temperiervorrichtung 8, die Kalibriervorrichtung 7 und die Detektionseinrichtung 20 gezeigt ist.

Die Detektionseinrichtung 20 umfasst insbesondere mindestens 32 Detektionselemente, so dass ausreichend viele Punkte auf dem Umfang des Folienschlauchs gleichzeitig detektierbar sind. Beispielsweise hat der Detektor mindestens eine so genannte halbVGA-Auflösung, also mindestens 320 Detektionselemente pro Seitenrichtung. Ein Detektor hat dabei bevorzugt eine Wiederholrate von mindestens 3Hz, bevorzugt mindestens 9 Hz, d. h. dass pro Sekunde mindestens drei und bevorzugt mindestens neun Detektionen mit jedem Detektionselement durchführbar sind. Jedes der Detektionselemente ist in der Lage, für eine oder mehrere Wellenlängenbereiche die zugehörige Intensität zu messen. Insbesondere im Bereich der Infrarotstrahlung wird für jede dieser Wellenlängenbereiche die Strahlungsintensität gemessen und aus dieser dann eine Temperatur des Folienschlauchs abgeleitet.

Es kann, wie gezeigt, eine Detektionseinrichtung 20 vorgesehen sein. Um jedoch einen größeren Umfangsbereich abtasten zu können, ist es vorteilhaft, die Detektionseinrichtung 20 in Umfangsrichtung der Folienblase herum bewegbar auszugestalten. Alternativ oder ergänzend kann wenigstens eine zweite Detektionseinrichtung vorgesehen sein, mit welcher Flächenbereiche der Oberfläche der Folienblase 6 abtastbar sind, die von der ersten Detektionseinrichtung 20 zumindest teilweise nicht abtastbar sind.

Die Figur 2 zeigt nun die Orte gleicher Intensität bzw. gleicher Temperatur, wobei die einzelnen Orte durch eine Linie 30 miteinander verbunden sind. Es ist eine Schar solcher Linien dargestellt, die jedoch nicht einzeln mit Bezugszeichen versehen worden sind. Jede dieser Linien stellt somit den Intensitäten bzw. Temperaturverlauf auf der Oberfläche der Folienbase 6 dar, wobei insbesondere die in Transportrichtung gesehen erste Linie die höchste Temperatur und die letzte Linie die niedrigste Temperatur repräsentiert.

Die unterbrochene Linie 31 stellt eine Mittelwertlinie dar, mit der der mittlere Ort der zugehörigen Linie 30 dargestellt wird. Diese Linie 31 verläuft orthogonal zur Transportrichtung z und kann daher auch als Höhenlinie bezeichnet werden.

Exemplarisch wird anhand der Figur 2 gezeigt, wie Elemente der Blasfolienanlage 1 die Temperaturen der Folienblase 6 und damit den Verlauf der Orte gleicher Temperatur beeinflussen. Im Bereich der Luftbereitstellungseinrichtung 13 ist zu erkennen, dass die Linien stark in Richtung gegen die Transportrichtung z verlaufen. Das bedeutet, dass in diesem Bereich die Folienblase 6 eine höhere Temperatur ermittelt wird.

In einem Fall, der soeben beispielhaft erläutert worden ist, zeigt sich, dass die Detektionseinrichtung 20 sowie fakultativ weitere vorhandene Detektionseinrichtungen nicht nur die Strahlung der Folienblase 6 detektiert wird, sondern dass das detektierte Signal eine Überlagerung der Strahlung der Folienblase 6 und der Strahlung verschiedener anderer Körper darstellt. Ein Gedanke der vorliegenden Erfindung ist es, die Einflüsse anderer Körper zu berücksichtigen und insbesondere bei der Auswertung der Messungen zu subtrahieren.

| **Bezugszeichenliste** | |
|---|---|
| 1 | Vorrichtung zur Herstellung eines Folienschlauches |
| 2 | Extruder |
| 3 | Leitung |
| 4 | Düsenkopf |
| 5 | Ringdüse |
| 6 | Folienblase |
| 7 | Kalibriervorrichtung |
| 8 | Temperiervorrichtung |
| 9 | Flachlegevorrichtung |
| 10 | Abzugswalzen |
| 11 | Schlauch- bzw. Symmetrieachse |
| 12 | Pfeil |
| 13 | Luftbereitstellungseinrichtung |
| 14 | |
| 15 | Reversiereinrichtung |
| 16 | Walze |
| 17 | Pfeil |
| 18 | |
| 19 | |
| 20 | Detektionseinrichtung |
| 30 | Linie |
| 31 | Unterbrochene Linie |
| 21 | |
| 22 | |

## Patentansprüche

1. Verfahren für eine Überwachung einer Folienblase (6) in einem Austrittsbereich nach dem Austreten aus einer Austrittsdüse (5) und vor dem Verlassen einer Kalibriereinrichtung einer Blasfolienvorrichtung (1), aufweisend die folgenden Schritte:
• Detektieren der Intensitäten der von mindestens zwei unterschiedlichen Orten der Außenoberfläche der Blasfolie emittierten Strahlung mittels wenigstens einem optischen Sensor zu verschiedenen, aufeinander folgenden Zeitpunkten
• Ermitteln von Orten gleicher Intensitäten
• Ermitteln des zeitlichen Verlaufs der Orte gleicher Intensitäten.

2. Verfahren nach Anspruch 1, zusätzlich mit dem folgenden Schritt:
Ermitteln zumindest einer Abweichung der Orte gleicher Intensitäten zu einer Mittelwertlinie, die durch den Mittelwert der Orte in Transportrichtung der Folie in horizontaler Richtung verläuft, zu unterschiedlichen Zeitpunkten

3. Verfahren nach einem der vorstehenden Ansprüche, zusätzlich mit dem folgenden Schritt:
Zuordnung der Abweichungen einer der folgenden Kategorien:
• Dynamische Abweichungen (Abweichungen mit zeitlichen Änderungen)
• Stationäre Abweichungen (Abweichungen ohne zeitliche Änderungen)

4. Verfahren nach einem der vorstehenden Ansprüche, zusätzlich mit dem folgenden Schritt:
Vergleichen des zeitlichen Verlaufs von Orten gleicher Intensitäten für zumindest zwei verschiedene Intensitäten.

5. Verfahren nach einem der vorstehenden Ansprüche, zusätzlich mit dem folgenden Schritt:
Zuordnung zumindest einer Abweichung zu einer Störungsursache.

6. Verfahren nach einem der vorstehenden Ansprüche, zusätzlich mit dem folgenden Schritt:
Zuordnung einer stationären Abweichung zu einem Element der Blasfolienvorrichtung.

7. Verfahren nach einem der vorstehenden Ansprüche, zusätzlich mit dem folgenden Schritt:
Berücksichtigung des Einflusses eines Elements der Blasfolienvorrichtung bei der Ermittlung von Abweichungen der Orte gleicher Intensitäten zu der Mittelwertlinie.

8. Blasfolienanlage zur Herstellung und Überwachung einer Folienblase, mit einer Austrittsdüse, aus dessen Austrittsbereich die Folienblase herausführbar ist und mit einer stromabwärts der Austrittsdüse angeordneten Kalibriereinrichtung, durch welche die Blasfolie führbar ist, ferner mit:
• einer Detektionseinrichtung zum Detektieren der Intensitäten der von mindestens zwei unterschiedlichen Orten der Außenoberfläche der Blasfolie emittierten Strahlung mittels wenigstens eines optischen Sensors zu verschiedenen, aufeinander folgenden Zeitpunkten und zum Umwandeln der detektieren Intensitäten in elektrische Signale
• einer Recheneinrichtung zum Empfangen und Verarbeiten der elektrischen Signale, wobei mit der Recheneinrichtung Orten gleicher Intensitäten ermittelbar sind und
• wobei mit der Recheneinrichtung der zeitliche Verlauf der Orte gleicher Intensitäten ermittelbar sind.
